# EUROPÄISCHE PATENTSCHRIFT

(11) **EP 4 004 700 B1**
(45) Veröffentlichungstag und Bekanntmachung des Hinweises auf die Patenterteilung: **25.03.2026**
(21) Anmeldenummer: 20737359.8
(22) Anmeldetag: 02.07.2020
(51) Int. Cl.: G06F 3/0481, G06F 3/0484, G06F 3/0488, G06F 3/01

(54) **VERFAHREN ZUM BETREIBEN EINES SYSTEMS UND SYSTEM ZUR DURCHFÜHRUNG DES VERFAHRENS**
METHOD FOR OPERATING A SYSTEM AND SYSTEM FOR CARRYING OUT THE METHOD
PROCÉDÉ POUR FAIRE FONCTIONNER D'UN SYSTÈME ET SYSTÈME POUR LA MISE EN OEUVRE DU PROCÉDÉ

(30) Priorität: 22.07.2019 DE 102019005067
(43) Veröffentlichungstag der Anmeldung: 01.06.2022
(73) Patentinhaber: SEW-EURODRIVE GmbH & Co. KG, 76646 Bruchsal (DE)
(72) Erfinder: SANTANA, Rafaely Goncalves, 13347-510 Indaiatuba-SP (BR); GRIMM, Andreas, 13323-301 Salto-SP (BR); VIEIRA, Antonio Ventriglia, 13320-370 Salto-SP (BR)
(86) Internationale Anmeldenummer: PCT/EP2020/025313
(87) Internationale Veröffentlichungsnummer: WO 2021/013380

(56) Entgegenhaltungen:
- WO-A1-2016/130895
- DE-A1- 102016 121 281
- US-A1- 2011 055 049
- US-A1- 2012 218 298
- US-A1- 2019 266 803

## Beschreibung

Die Erfindung betrifft ein Verfahren zum Betreiben eines Systems und ein System zur Durchführung des Verfahrens.

Es ist allgemein bekannt, dass mittels eines Kommunikationsgerät Bilder anzeigbar sind und mittels eines Maßblatts ein Objekt in einer oder mehreren Ansichten darstellbar ist.

Als Codierung ist der QR-Code allgemein bekannt.

**Aus der** US 10 026 229 B1 **ist als nächstliegender Stand der Technik eine Hilfsvorrichtung als Plattform für eine realitätsnahe Darstellung bekannt.**

**Aus der** US 8 922 588 B2 **ist ein Informationsverarbeitungssystem bekannt.**

**Aus der** US 2012 / 0 327 117 A1 **ist eine digital codierte markierungsbasierte realitätsnahe Darstellung bekannt.**

**Aus der** US 2014 / 0 270 477 A1 **ist ein Verfahren zum Anzeigen eines dreidimensionalen Modells von einem photogrammetrischen Scan bekannt.**

**Aus der** US 2015/ 0 302 639 A1 **ist ein Verfahren zur Erzeugung verstärkter Bilder mit realitätsnahen Merkmalen bekannt.**

**Aus der** DE 10 2016 121 281 A1 **ist als nächstliegender Stand der Technik ein Verfahren zum Überlagern eines Abbilds einer realen Szenerie mit virtuellen Bilddaten bekannt.**

**Aus der** US 2011/055049 A1 **ist ein Verfahren zur Erzeugung einer virtuellen Erfahrung in Verbindung mit einem gespeicherten Wertzeichen bekannt.**

**Aus der** US 2012/218298 A1 **ist ein Informationsprozesssystem bekannt.**

**Aus der** WO 2016 /130895 A1 **ist eine Zwischenkommunikation zwischen einem auf einem Kopf montierten Anzeigemittel und einem realen Objekt bekannt.**

Der Erfindung liegt daher die Aufgabe zugrunde, die Fehler bei der Auswahl eines Objekts zu verringern.

Die Erfindung wird durch die unabhängigen Ansprüche 1 und 5 definiert. Die abhängigen Ansprüche definieren bevorzugte Ausführungsformen der Erfindung.

Wichtige Merkmale der Erfindung bei dem Verfahren zum Betreiben eines Systems sind, dass das Anzeigemittel mit Codierung und Kommunikationsgerät, das einen Bildschirm aufweist, ausgeführt ist,
wobei das Kommunikationsgerät mittels einer Datenaustauschverbindung, insbesondere Internet, mit einem Rechner, insbesondere Server, verbunden wird,
wobei die Codierung vom Kommunikationsgerät, insbesondere von einer mit einer Kamera des Kommunikationsgeräts verbundenen Auswerteeinheit des Kommunikationsgeräts, erkannt wird und vom Kommunikationsgerät abhängig von der Codierung ein Datensatz aus dem Rechner zur Darstellung eines Objekts angefordert und empfangen wird,
wobei das Objekt mittels des Kommunikationsgeräts, insbesondere mittels des Bildschirms des Kommunikationsgeräts, dreidimensional dargestellt wird,
wobei die räumliche Orientierung des dreidimensional dargestellten Objekts auf die räumliche Orientierung des Anzeigemittels bezogen ist.

Von Vorteil ist dabei, dass der Betrachter nicht nur die zweidimensionale Darstellung, insbesondere Schnittansicht, Draufsicht, Schrägansicht oder dergleichen, auf dem Anzeigemittel, insbesondere bedrucktes Papier, gezeigt bekommt, sondern auch eine räumliche Darstellung des Objekts, wobei die räumliche Darstellung über dem Anzeigemittel zwischen dem Betrachter und dem Anzeigemittel erfolgt. Somit kann der Betrachter durch Drehen des Anzeigemittels ein Drehen des Objekts bewirken. Außerdem ist der Betrieb des Objekts virtuell ausführbar und beobachtbar. Bewegbare Teile, insbesondere drehbare Wellen, sind vom Betrachter beobachtbar. Somit ist dem Betrachter nicht nur die präzise Maßangabe des Maßblatts, also einer zweidimensionalen Ansicht des Objekts, zugänglich, sondern auch die räumliche Ansicht des Objekts. Bei explodierter Darstellung sind sogar die inneren Teile des Objekts in räumlicher dreidimensionaler Darstellung erkennbar.

Das Drehen des dreidimensional dargestellten Objekts ist entweder mit dem Drehen des Anzeigemittels innerhalb der das Anzeigemittel aufnehmenden Ebene ermöglicht oder alternativ durch entsprechende Eingaben am Kommunikationsgerät, beispielsweise das Durchführen einer Kreisbewegung am als Touchscreen ausgeführten Bildschirm des Kommunikationsgeräts.

Zur Durchführung der Erfindung muss also nur der das Objekt beschreibende und/oder darstellende Datensatz auf dem Rechner, insbesondere Server, hinterlegt werden und dieser mit dem Internet verbunden werden. Das Anzeigemittel muss außerdem mit einer Codierung und das Kommunikationsgerät mit einer entsprechend geeignet ausgeführten Software ausgestattet werden.

Die Erfindung bewirkt also, dass die menschliche Vorstellungskraft unterstützt wird und/oder die Anstrengung bei der Erlangung eines gedanklichen Bildes eines Objekts verringert wird, und führt zu einem genaueren und umfassenderen Wissen sowie Verständnis über das Objekt. Eine Entscheidung über den Einsatz des realen Zwillings des Objekts in einer industriellen Anlage ist somit fehlerärmer zu treffen. Somit werden also Fehler vermieden und auch daraus bewirkte Unfälle oder Schäden.

Bei einer vorteilhaften Ausgestaltung stellt das Anzeigemittel eine zweidimensionale Darstellung und/oder Schnittansicht des Objekts dar. Von Vorteil ist dabei, dass das Anzeigemittel in einfacher Weise als bedrucktes Papier ausführbar ist. Alternativ ist aber das Anzeigemittel auch als flacher Bildschirm ausführbar.

Bei einer vorteilhaften Ausgestaltung wird durch Betätigung des Kommunikationsgeräts, insbesondere durch Eingabe von Befehlen, das Objekt gedreht, vergrößert und/oder explodiert dargestellt. Von Vorteil ist dabei, dass eine Betrachtung des Objekts in der gewünschten Weise ausführbar ist.

Bei einer vorteilhaften Ausgestaltung werden durch Betätigung des Kommunikationsgeräts, insbesondere durch Eingabe von Befehlen, zum Objekt zugeordnete Informationen, wie insbesondere technische Informationen, Bedienungsanleitung oder dergleichen, angezeigt. Von Vorteil ist dabei, dass der Betrachter nicht nur die auf dem Anzeigemittel angezeigten Informationen angezeigt bekommt, sondern auch weitergehende Informationen, die sich auf das Objekt beziehen.

Bei einer vorteilhaften Ausgestaltung wird nach Erkennen einer auf einem zweiten Anzeigemittel vorhandenen zweiten Codierung ein zweites Objekt mittels des Kommunikationsgeräts, insbesondere mittels des Bildschirms des Kommunikationsgeräts, dreidimensional dargestellt,
wobei die räumliche Orientierung des dreidimensional dargestellten zweiten Objekts auf die räumliche Orientierung des zweiten Anzeigemittels, insbesondere der zweiten Codierung, bezogen ist. Von Vorteil ist dabei, dass verschiedene Objekte, insbesondere ein Getriebe und ein Elektromotor, anzeigbar sind.

Bei einer vorteilhaften Ausgestaltung wird das erste Objekt mittels des Kommunikationsgeräts, insbesondere mittels des Bildschirms des Kommunikationsgeräts, dreidimensional dargestellt,
wobei die räumliche Orientierung des dreidimensional dargestellten ersten Objekts auf die räumliche Orientierung des zweiten Anzeigemittels, insbesondere der zweiten Codierung, bezogen ist, insbesondere zur Darstellung eines Zusammenbaus des ersten und des zweiten Objekts. Von Vorteil ist dabei, dass ein Getriebemotor als Zusammenbau eines Getriebes und eines Elektromotors darstellbar ist.

Wichtige Merkmale bei dem System zur Durchführung des Verfahrens sind, dass die Kamera des Kommunikationsgeräts auf der dem Anzeigemittel zugeordneten Seite des Kommunikationsgeräts angeordnet ist,
insbesondere wobei das Anzeigemittel auf einer ebenen Fläche angeordnete ist, insbesondere auf einer Tischfläche.

Von Vorteil ist dabei, dass eine Drehung des Anzeigemittels in einer Ebene ausführbar ist.

Die Erfindung wird nun anhand von schematischen Abbildungen näher erläutert:

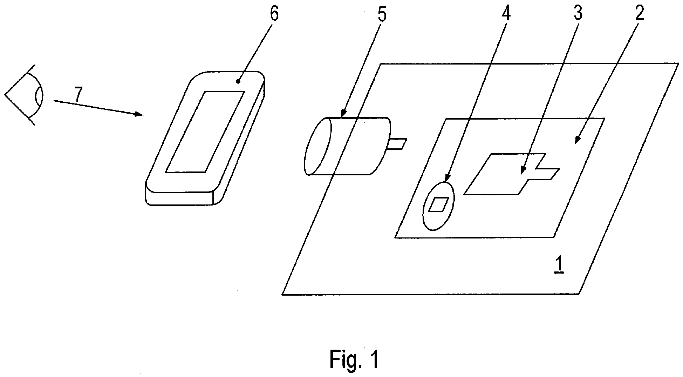

In der Figur 1 ist ein erfindungsgemäßes System dargestellt.

Hierbei wird auf einer Arbeitsfläche 1, insbesondere Tischfläche, ein Anzeigemittel 2, insbesondere Papierblatt oder Bildschirm, angeordnet.

Dieses Anzeigemittel 2 zeigt eine flächige, also zweidimensionale Darstellung 3 sowie eine Codierung 4, insbesondere QR-Code, an.

Das Anzeigemittel 2 stellt also beispielsweise ein Maßblatt dar, in welchem ein Objekt, beispielsweise eine Komponente eines Antriebs, insbesondere Getriebemotors, in Schnittansichten und/oder Schrägansichten zweidimensional dargestellt wird, wobei Abmessungen mechanischer Bauteile ebenfalls dargestellt sind.

Ein Betrachter schaut in Blickrichtung 7 zum Anzeigemittel 2. Zwischen dem Betrachter und dem Anzeigemittel 2 wird ein tragbares Kommunikationsgerät 6, insbesondere Smartphone oder Tablet, angeordnet. Eine Kamera des tragbaren Kommunikationsgeräts 6 ist auf das Anzeigemittel 2 gerichtet. Eine Bildauswerteeinheit des tragbaren Kommunikationsgeräts 6 detektiert die dargestellte Codierung 4, insbesondere QR Codierung.

Abhängig von der in der Codierung 4 dargestellten Information lädt das tragbare Kommunikationsgerät einen entsprechenden Datensatz von einem über eine Internetbasierte Datenverbindung verbundenen Server herunter. Mittels dieses Datensatzes wird eine dreidimensionale Darstellung 5 des Objekts mittels des Bildschirms, insbesondere Touchscreen, des Kommunikationsgeräts 6 bewirkt, das auf der von der Kamera abgewandten, also dem Betrachter zugewandten Seite des Kommunikationsgeräts 6 bewirkt.

Das Objekt scheint dem Betrachter im Raumbereich zwischen Betrachter und Anzeigemittel 2 schwebend. Die dreidimensionale Darstellung 5 des Objekts ist dabei nur schematisch in Figur 1 dargestellt.

Durch Eingabe von Befehlen am Kommunikationsgerät 6 ist ein Drehen des Objekts oder eine explodierte Darstellung des Objekts anzeigbar. Darüber hinaus ist auch das Objekt vergrößert darstellbar.

Auf diese Weise ist also dem Betrachter gleichzeitig die Betrachtung des Maßblattes des Objekts sowie des darüber ihm schwebend in der Luft erscheinenden Objekts ermöglicht.

Außerdem ist am Bildschirm auch eine Betriebsanleitung und/oder es sind weiterführende Informationen und Dokumente anzeigbar.

Wenn der Betrachter das Maßblatt dreht, also das Maßblatt um eine Drehachse gedreht wird, die parallel zur Normalenebene der ebenen Arbeitsfläche 1, also Tischebene, ausgerichtet ist, wird die Codierung 4 mitgedreht. Die auf das Kommunikationsgerät 6 bezogenen Winkelstellung wird erkannt und das Objekt ebenso gedreht dargestellt. Die dreidimensionale Darstellung 5 ist also stets auf die Ausrichtung des Maßblatts bezogen. Die durch Eingabe am Kommunikationsgerät 6 bewirkte Drehung des Objekts wird stets zusätzlich ausgeführt.

Bei weiteren erfindungsgemäßen Ausführungsbeispielen wird auch ein virtuelles Betreiben des Objekts ermöglicht. Beispielsweise ist das Objekt ein Elektromotor, ein Getriebe oder ein Getriebemotor. Somit ist das Drehen der Welle des Objekts darstellbar. Wenn also ein aus dem Objekt herausragender Wellenstumpf eine Passfedernut aufweist, ist diese drehend darstellbar. Auch mit der Welle drehfest verbundene Teile sind mitdrehend darstellbar.

Bei weiteren erfindungsgemäßen Ausführungsbeispielen wird nachfolgend ein weiteres Anzeigemittel, insbesondere Maßblatt, insbesondere beispielsweise eines Getriebes, verwendet und wiederum mit dem Kommunikationsgerät die nun auf dieses zweite Objekt, insbesondere Getriebe, bezogene Codierung erkannt, so dass der entsprechende Datensatz des zweiten Objekts vom Rechner heruntergeladen wird.

Vorzugsweise werden auch weitere Anzeigemittel von weiteren Objekten verwendet und die entsprechenden Datensätze im Kommunikationsgerät hinterlegt.

Danach wird in einem nachfolgenden Verfahrensschritt ein Zusammenbau der dreidimensionalen Darstellungen des ersten und des zweiten Objekts, insbesondere sowie gegebenenfalls der weiteren Objekte, ausgeführt. Hierzu werden die dreidimensionalen Darstellungen der Objekte gleichzeitig gezeigt, wobei allerdings alle Darstellungen in ihrer räumlichen Lage auf eine einzige Codierung bezogen werden.

Beispielhaft stellt die erste Codierung auf dem ersten Anzeigemittel 2 einen Elektromotor dar und die zweite Codierung auf dem zweiten Anzeigemittel 2 ein Getriebe. Beim Zusammenbau werden der Elektromotor und das Getriebe gleichzeitig dreidimensional dargestellt, wobei der Elektromotor räumlich relativ zur zweiten Codierung, also zur Codierung des Getriebes positioniert wird. Der mit dem Getriebe zu verbindende Flansch des Motors wird also an der vorgesehenen Position angeordnet, die auf die zweite Codierung bezogen ist. Diese relative Beabstandung ist insbesondere also Vektor im Datensatz des Getriebes enthalten.

Somit ist eine räumliche Darstellung des Zusammenbaus erreicht.

### Bezugszeichenliste

1 Arbeitsfläche, insbesondere Tischfläche
2 Anzeigemittel, insbesondere Papierblatt oder Bildschirm
3 zweidimensionale Darstellung
4 Codierung, insbesondere QR-Code
5 dreidimensionale Darstellung
6 tragbares Kommunikationsgerät, insbesondere Smartphone oder Tablet
7 Blickrichtung

## Patentansprüche

1. Verfahren zum Betreiben eines Systems, aufweisend ein Anzeigemittel (2) mit QR-Code- Codierung und ein Kommunikationsgerät (6), das einen Bildschirm aufweist
wobei das Anzeigemittel (2) mit der QR-Code-Codierung auf einer Arbeitsfläche (1) angeordnet ist,
wobei das Kommunikationsgerät (6) mittels einer Datenaustauschverbindung, insbesondere Internet, mit einem Rechner, insbesondere einem Server, verbunden wird,
**wobei** die QR-Code-Codierung (4) von einer Auswerteeinheit des Kommunikationsgeräts (6), **die mit einer Kamera des Kommunikationsgeräts (6) verbunden ist,** erkannt wird und vom Kommunikationsgerät (6), abhängig von der QR-Code-Codierung (4), ein Datensatz aus dem Rechner zur Darstellung (5) eines ersten Objekts angefordert und empfangen wird,
wobei das erste Objekt mittels des Bildschirms des Kommunikationsgeräts (6) dreidimensional dargestellt wird,
wobei die räumliche Orientierung des dreidimensional dargestellten **ersten** Objekts auf die räumliche Orientierung des Anzeigemittels (2) **und somit auf die räumliche Orientierung** der QR-Code-Codierung (4), bezogen ist,
wobei bei einer Drehung des Anzeigemittels (2) und somit auch der QR-Code-Codierung um eine Drehachse die parallel zur Normalebenen der Arbeitsfläche (1) ist **die auf das Kommunikationsgerät (6)** bezogene **Winkelstellung des Anzeigemittels (2) erkannt wird und das** erste **Objekt ebenso gedreht wird,**
**durch Eingabe am Kommunikationsgerät (6) eine zusätzliche Drehung des ersten Objekts ausgeführt wird,**
**wobei nach Erkennen einer, auf einem zweiten Anzeigemittel (2) vorhandenen, zweiten** Codierung **(4) ein zweites Objekt mittels des Bildschirms des Kommunikationsgeräts (6) dreidimensional dargestellt wird,**
**wobei die räumliche Orientierung des dreidimensional dargestellten zweiten Objekts auf die räumliche Orientierung des zweiten Anzeigemittels (2) und somit auf die räumliche Orientierung der zweiten** Codierung **(4), bezogen ist,**
**wobei danach in einem nachfolgenden Verfahrensschritt ein Zusammenbau der dreidimensionalen Darstellungen des ersten und des zweiten Objekts ausgeführt wird,**
**wobei** zur Darstellung (5) eines Zusammenbaus des ersten und des zweiten Objekts **die räumliche Orientierung des dreidimensional dargestellten ersten Objekts auf die räumliche Orientierung des zweiten Anzeigemittels (2) und somit auf die räumliche Orientierung der zweiten QR-Code-Codierung (4) bezogen ist,**
wobei durch Betätigung des Kommunikationsgeräts (6), also durch Eingabe von Befehlen, zum ersten Objekt zugeordnete Informationen in Form einer Bedienungsanleitung angezeigt werden.

2. Verfahren nach Anspruch 1,
**dadurch gekennzeichnet, dass**
das Anzeigemittel (2) eine zweidimensionale Darstellung (3) und/oder Schnittansicht des **ersten** Objekts darstellt.

3. Verfahren nach einem der vorangegangenen Ansprüche,
**dadurch gekennzeichnet, dass**
durch Betätigung des Kommunikationsgeräts (6), **also** durch Eingabe von Befehlen, das erste Objekt vergrößert und/oder explodiert dargestellt wird.

4. Verfahren nach einem der vorangegangenen Ansprüche,
**dadurch gekennzeichnet, dass**
das dreidimensional dargestellte **erste** Objekt bewegbare Teile, insbesondere drehbar gelagerte Wellen, aufweist, die bewegt dargestellt werden.

5. System zur Durchführung des Verfahrens nach einem der vorangegangenen Ansprüche, **dadurch gekennzeichnet, dass**
die Kamera des Kommunikationsgeräts (6) auf der dem Anzeigemittel (2) zugeordneten Seite des Kommunikationsgeräts (6) angeordnet ist,
wobei insbesondere die Arbeitsfläche eine ebene Fläche ist, insbesondere eine Tischfläche (1).

## Claims

1. Method for operating a system which comprises a display means (2) having QR code encoding and which comprises a communication device (6) having a screen,
wherein the display means (2) having the QR code encoding is arranged on a work surface (1),
wherein the communication device (6) is connected to a computer, in particular a server, by means of a data exchange link, in particular the internet,
wherein the QR code encoding (4) is identified by an analysis unit of the communication device (6), said analysis unit being connected to a camera of the communication device (6), and, depending on the QR code encoding (4), a dataset from the computer for visualising (5) a first object is requested by the communication device (6) and received,
wherein the first object is visualised three-dimensionally by means of the screen of the communication device (6),
wherein the orientation in space of the three-dimensionally visualised first object is related to the orientation in space of the display means (2) and thus to the orientation in space of the QR code encoding (4),
wherein, when the display means (2), and thus also the QR code encoding, is rotated about an axis of rotation that is parallel to the normal plane of the work surface (1), the angular position of the display means (2), said angular position being related to the communication device (6), is identified and the first object is similarly rotated,
additional rotation of the first object is carried out by performing an input on the communication device (6),
wherein, after a second encoding (4) present on a second display means (2) is identified, a second object is visualised three-dimensionally by means of the screen of the communication device (6),
wherein the orientation in space of the three-dimensionally visualised second object is related to the orientation in space of the second display means (2) and thus to the orientation in space of the second encoding (4),
wherein, next, in a subsequent method step, the three-dimensional visualisations of the first and the second object are combined,
wherein, to visualise (5) a combination of the first and the second object, the orientation in space of the three-dimensionally visualised first object is related to the orientation in space of the second display means (2) and thus to the orientation in space of the second QR code encoding (4),
wherein, by operating the communication device (6), i.e. by inputting commands, information associated with the first object in the form of operating instructions is displayed.

2. Method according to claim 1,
**characterised in that**
the display means (2) visualises a two-dimensional visualisation (3) and/or a sectional view of the first object.

3. Method according to any of the preceding claims,
**characterised in that**
by operating the communication device (6), i.e. by inputting commands, the first object is visualised in an enlarged and/or exploded manner.

4. Method according to any of the preceding claims,
**characterised in that**
the three-dimensionally visualised first object has moving parts, in particular rotatably mounted shafts, that are visualised in motion.

5. System for carrying out the method according to any of the preceding claims,
**characterised in that**
the camera of the communication device (6) is arranged on that side of the communication device (6) that is associated with the display means (2),
the work surface in particular being a planar surface, in particular a table top (1).

## Revendications

1. Procédé permettant de faire fonctionner un système, comprenant un moyen d'affichage (2) avec codage par code QR et un appareil de communication (6) qui présente un écran,
le moyen d'affichage (2) avec le codage par code QR étant agencé sur une surface de travail (1),
l'appareil de communication (6) étant connecté à un ordinateur, en particulier à un serveur, au moyen d'une connexion d'échange de données, en particulier d'Internet, le codage par code QR (4) étant reconnu par une unité d'évaluation de l'appareil de communication (6) qui est reliée à une caméra de l'appareil de communication (6), et un jeu de données issu de l'ordinateur étant demandé et reçu par l'appareil de communication (6), en fonction du codage par code QR (4), en vue d'une représentation (5) d'un premier objet,
le premier objet étant représenté de manière tridimensionnelle au moyen de l'écran de l'appareil de communication (6),
l'orientation spatiale du premier objet représenté de manière tridimensionnelle étant liée à l'orientation spatiale du moyen d'affichage (2) et donc à l'orientation spatiale du codage par code QR (4),
la position angulaire du moyen d'affichage (2) par rapport à l'appareil de communication (6) étant reconnue, et le premier objet étant également tourné, lorsqu'il y a rotation du moyen d'affichage (2) et donc du codage par code QR autour d'un axe de rotation parallèle aux plans normaux de la surface de travail (1),
une rotation supplémentaire du premier objet étant mise en œuvre grâce à une saisie au niveau de l'appareil de communication (6),
un second objet étant représenté de manière tridimensionnelle au moyen de l'écran de l'appareil de communication (6) après reconnaissance d'un second codage (4) présent sur un second moyen d'affichage (2),
l'orientation spatiale du second objet représenté de manière tridimensionnelle étant liée à l'orientation spatiale du second moyen d'affichage (2) et donc à l'orientation spatiale du second codage (4),
un assemblage des représentations tridimensionnelles des premier et second objets étant ensuite mis en œuvre dans une étape de procédé ultérieure,
l'orientation spatiale du premier objet représenté de manière tridimensionnelle étant liée à l'orientation spatiale du second moyen d'affichage (2) et donc à l'orientation spatiale du second codage par code QR (4), en vue d'une représentation (5) d'un assemblage du premier objet et du second objet,
des informations associées au premier objet étant affichées sous la forme d'un mode d'emploi grâce à un actionnement de l'appareil de communication (6), c'est-à-dire grâce à une saisie de commandes.

2. Procédé selon la revendication 1,
**caractérisé en ce que**
le moyen d'affichage (2) représente une représentation bidimensionnelle (3) et/ou une vue en coupe du premier objet.

3. Procédé selon l'une quelconque des revendications précédentes,
**caractérisé en ce que**
le premier objet est représenté agrandi et/ou en éclaté grâce à un actionnement de l'appareil de communication (6), c'est-à-dire grâce à une saisie de commandes.

4. Procédé selon l'une quelconque des revendications précédentes,
**caractérisé en ce que**
le premier objet représenté de manière tridimensionnelle présente des pièces mobiles, en particulier des arbres montés rotatifs, qui sont représentées en mouvement.

5. Système permettant la mise en œuvre du procédé selon l'une quelconque des revendications précédentes,
**caractérisé en ce que**
la caméra de l'appareil de communication (6) est agencée du côté de l'appareil de communication (6) qui est associé au moyen d'affichage (2).
la surface de travail étant en particulier une surface plane, en particulier une surface de table (1).
